# EUROPEAN PATENT APPLICATION

(11) **EP 4 769 251 A1**
(43) Date of publication of application: **01.07.2026**
(21) Application number: 25220556.2
(22) Date of filing: 03.12.2025
(51) Int. Cl.: G06N 20/00

(54) **ANOMALY CORRECTION VIA BENEVOLENT ADVERSARIAL ATTACKS**

(30) Priority: 27.12.2024 US 202419004072
(71) Applicant: Red Hat, LLC, Raleigh, NC 27601 (US)
(72) Inventor: XU, Christina, Raleigh, 27601 (US); GEADA, Robert Joao, Raleigh, 27601 (US)
(74) Representative: Murgitroyd & Company

(57) **Abstract**

A system and method of an anomaly detection and correction system for benevolent adversarial attacks. The method includes receiving a request to provide an input dataset to a machine learning (ML) model, trained using a training data distribution, to generate predictions based on input data. The method includes calculating, based on model traits of the model and the input dataset, an anomaly score indicating an accuracy of the model associated with generating a prediction output. The method includes adjusting, by a processing device based on the anomaly score, the input dataset to generate a modified input dataset. The method includes increasing a likelihood of an accurate prediction by the ML model when generating a prediction output by providing the modified input dataset to the model instead of the input dataset.

## Description

### TECHNICAL FIELD

The present disclosure relates generally to artificial intelligence, and more particularly, to systems and methods of an anomaly detection and correction system for benevolent adversarial attacks.

### BACKGROUND

Machine learning models are algorithms designed to learn patterns from data and make predictions or decisions without being explicitly programmed. Supervised learning models, such as linear regression and decision trees, are trained on labeled data to predict outcomes. Unsupervised learning models, like k-means clustering and principal component analysis, identify hidden patterns in unlabeled data. Reinforcement learning models, such as Q-learning, learn optimal actions through trial and error in dynamic environments.

### SUMMARY

According to a first aspect of the disclosure there is provided a method comprising:
receiving a request to provide an input dataset to a machine learning (ML) model, trained using a training data distribution, to generate predictions based on input data;
calculating, based on model traits of the ML model and the input dataset, an anomaly score indicating a degree of similarity between the input dataset and the training data distribution;
adjusting, by a processing device based on the anomaly score, the input dataset to generate a modified input dataset; and
increasing a likelihood of an accurate prediction by the ML model when generating a prediction output by providing the modified input dataset to the ML model instead of the input dataset.

Calculating, based on the ML model traits of the ML model and the input dataset, the anomaly score, is without providing the input data to the model.

Increasing the likelihood of the accurate prediction by the ML model when generating the prediction output may be without retraining the ML model after receiving the request and without retraining the ML model before providing the modified input dataset to the ML model.

Calculating, based on the model traits of the ML model and the input dataset, the anomaly score, may comprise calculating a difference between the input dataset and the training data distribution.

The input dataset may comprise a plurality of portions, and adjusting, based on the anomaly score, the input dataset to generate the modified input dataset, may comprise determining that a first portion of the plurality of portions of the input dataset has a greater impact on the anomaly score than each impact associated with remaining portions of the plurality of portions.

The method may further comprise adjusting the first portion without adjusting the remaining portions of the plurality of portions.

The method may further comprise calculating, based on the model traits of the ML model and the modified input dataset, an updated anomaly score indicating an updated accuracy of the ML model associated with generating an updated prediction output.

The method may further comprise adjusting, based on the updated anomaly score, the modified input dataset to generate a different input dataset; and providing the different input dataset to the ML model to cause the ML model to generate the updated prediction output.

The method may further comprise acquiring a plurality of tuples associated with the ML model, wherein each tuple of the plurality of tuples comprising an association between a distinct input dataset, a distinct model output calculation, and a distinct anomaly score; and generating, based on the plurality of tuples, one or more robustness scores indicating a robustness of the ML model to process anomalous inputs.

The method may further comprise sending the prediction output and the one or more robustness scores to a client device.

According to a second aspect of the disclosure there is provided a system comprising a memory, and a processing device, operatively coupled to the memory, configured to:
receive a request to provide an input dataset to a machine learning (ML) model, trained using a training data distribution, to generate predictions based on input data;
calculate, based on model traits of the ML model and the input dataset, an anomaly score indicating an accuracy of the ML model associated with generating a prediction output;
adjust, based on the anomaly score, the input dataset to generate a modified input dataset; and
increase a likelihood of accuracy of an accurate prediction by the ML model when generating model to generate a prediction output by providing the modified input dataset to the ML model instead of the input dataset.

The processing device may be configured to calculate, based on the model traits of the ML model and the input dataset, the anomaly score, without providing the input data to the ML model.

The processing device may be configured to increase the likelihood of the accurate prediction by the ML model when generating the prediction output is without retraining the ML model after receiving the request and without retraining the ML model before providing the modified input dataset to the ML model.

The processing device may be configured to calculate, based on the model traits of the ML model and the input dataset, the anomaly score, by calculating a difference between the input dataset and the training data distribution.

The input dataset may comprise a plurality of portions, and the processing device may be configured to adjust, based on the anomaly score, the input dataset to generate the modified input dataset, by determining that a first portion of the plurality of portions of the input dataset has a greater impact on the anomaly score than each impact associated with remaining portions of the plurality of portions.

The processing device may be further configured to adjust the first portion without adjust the remaining portions of the plurality of portions.

The processing device may be further configured to calculate, based on the model traits of the ML model and the modified input dataset, an updated anomaly score indicating an updated accuracy of the ML model associated with generating an updated prediction output.

The processing device may be further configured to adjust, based on the updated anomaly score, the modified input dataset to generate a different input dataset; and provide the different input dataset to the ML model to cause the ML model to generate the updated prediction output.

The processing device may be further configured to acquire a plurality of tuples associated with the ML model, wherein each tuple of the plurality of tuples comprising an association between a distinct input dataset, a distinct model output calculation, and a distinct anomaly score; and generate, based on the plurality of tuples, one or more robustness scores indicating a robustness of the ML model to process anomalous inputs.

The processing device may be further configured to send the prediction output and the one or more robustness scores to a client device.

According to a third aspect of the disclosure there is provided a non-transitory computer-readable medium storing instructions that, when executed by a processing device, cause the processing device to:
receive a request to provide an input dataset to a machine learning (ML) model, trained using a training data distribution, to generate predictions based on input data;
calculate, based on model traits of the ML model and the input dataset, an anomaly score indicating an accuracy of the ML model associated with generating a prediction output;
adjust, by the processing device based on the anomaly score, the input dataset to generate a modified input dataset; and
increase a likelihood of accuracy of an accurate prediction by the ML model when generating model to generate a prediction output by providing the modified input dataset to the ML model instead of the input dataset.

The processing device may be caused to calculate, based on the model traits of the ML model and the input dataset, the anomaly score, without providing the input data to the ML model.

The processing device may be caused to increase the likelihood of the accurate prediction by the ML model when generating the prediction output is without retraining the ML model after receiving the request and without retraining the ML model before providing the modified input dataset to the ML model.

The processing device may be caused to calculate, based on the model traits of the ML model and the input dataset, the anomaly score, by calculating a difference between the input dataset and the training data distribution.

The input dataset may comprise a plurality of portions, and the processing device may be caused to adjust, based on the anomaly score, the input dataset to generate the modified input dataset, by determining that a first portion of the plurality of portions of the input dataset has a greater impact on the anomaly score than each impact associated with remaining portions of the plurality of portions.

The processing device may be further caused to adjust the first portion without adjust the remaining portions of the plurality of portions.

The processing device may be further caused to calculate, based on the model traits of the ML model and the modified input dataset, an updated anomaly score indicating an updated accuracy of the ML model associated with generating an updated prediction output.

The processing device may be further caused to adjust, based on the updated anomaly score, the modified input dataset to generate a different input dataset; and provide the different input dataset to the ML model to cause the ML model to generate the updated prediction output.

The processing device may be further caused to acquire a plurality of tuples associated with the ML model, wherein each tuple of the plurality of tuples comprising an association between a distinct input dataset, a distinct model output calculation, and a distinct anomaly score; and generate, based on the plurality of tuples, one or more robustness scores indicating a robustness of the ML model to process anomalous inputs.

The processing device may be further caused to send the prediction output and the one or more robustness scores to a client device.

### BRIEF DESCRIPTION OF THE DRAWINGS

The described embodiments and the advantages thereof may best be understood by reference to the following description taken in conjunction with the accompanying drawings. These drawings in no way limit any changes in form and detail that may be made to the described embodiments by one skilled in the art without departing from the spirit and scope of the described embodiments.
FIG. 1 is a block diagram depicting an example environment for anomaly correction via benevolent adversarial attacks, according to some embodiments;
FIG. 2A is a block diagram depicting an example of the ADM system in FIG. 1, according to some embodiments;
FIG. 2B is a block diagram depicting an example of the client device in FIG. 1, according to some embodiments;
FIG. 2C is a block diagram depicting an example environment of a system to detect and correct anomalies via benevolent adversarial attacks, according to some embodiments;
FIG. 3 is a flow diagram depicting a method of detecting and correcting anomalies via benevolent adversarial attack, according to some embodiments; and
FIG. 4 is a block diagram of an example computing device that may perform one or more of the operations described herein, in accordance with some embodiments.

### DETAILED DESCRIPTION

When monitoring deployments of machine learning (ML) models, identifying input data that is statistically different than the distribution of data that was expected to be passed to the model is important for identifying potentially unreliable inferences. Typically, this is characterized as data that is statistically different from the model's training data. For example, a model that is trained using a dataset of retirees to predict healthcare outcomes might be asked to make predictions on an infant's medical data. In this instance, the model is unlikely to produce useful results because the model does not have the requisite "experience" to make a meaningful prediction.

Anomaly detection is the fine-grained identification of such "different" data, describing when a single point differs from the expected distribution. For example, given the aforementioned model that predicts healthcare outcomes based on retiree medical data, an anomaly might be identified when a specific patient John Smith has an age of eighteen. Anomaly detectors for ML models are well studied, and there are a number of possible methods to automatically identify anomalies, and importantly, quantify the severity of anomaly that this specific input represents. In this instance, the model is unlikely to produce useful results because the model does not have the requisite 'experience' to make a meaningful prediction. Thus, there is a need for techniques that strengthen the robustness and reliability of ML models.

Aspects of the present disclosure address the above-noted and other deficiencies by providing an anomaly detection management (ADM) system that detects and corrects (or mitigates) anomalies of input data (e.g., input dataset) via benevolent adversarial attack by considering the anomaly measurement as the attack target. In some embodiments, there are prerequisites to such an ADM system, including input data (x) and a machine learning model M(x). Another prerequisite includes a differentiable anomaly measurer A that outputs an anomaly measure a as a function (e.g., A(M, x)=a), where differentiable means that all mathematical operations within the anomaly function are differentiable. This condition would be true for the majority of anomaly detectors built upon pure statistical analysis, detectors that directly hook into neural network gradients, or detectors that themselves are neural networks. Another prerequisite includes a minimum and maximum bound of anomaly, specified by user, where the minimum bound determines what magnitude of a constitutes an anomaly, and the maximum bound determines what magnitude of a constitutes an unfixable anomaly (e.g., too anomalous to be meaningfully remedied).

The ADM system utilizes one or more algorithms to determine whether an input dataset has some moderate anomaly α between the minimum and maximum bounds. For example, the ADM system can identify a ML model (e.g., A(M, x)=α) as the target "model" of an adversarial attack. Using an adversarial example generator, the ADM system can attack the A(M, x)=α system to generate minimal perturbations to x such that α is reduced to some value α' below the minimum bound. The ADM system uses the anomaly-corrected data x' as the new model input, to produce some new output y'.

As an additional value, the ADM system can collect the tuples (x, y, α, x', α', y') and perform analysis over them to measure a ML model's robustness to benevolent adversarial attacks, as well as its robustness to anomalous inputs. For example, the ADM system can identify how frequently y=y', that is, how often the mitigation of the anomaly did not result in a change in the model's predictions and use this to tune its anomaly detection algorithm to be more demonstrative of the ML model's true capabilities.

Benefits of the ADM system are that it can automatically mitigate moderate input anomalies for ML systems, thereby preventing the need for model retraining. For example, if the white balance or color distribution in an input image is anomalous, this system would be well-suited to automatically correct for this. As another example, a lightbulb above a system that identifies parts on a production line could fail, rendering the input images darker than the expected distribution. The ADM system could rectify these images automatically without necessarily needing to discard the predictions made during this time. Furthermore, the ADM system could also be both model and anomaly detector agnostic, making it applicable in a wide variety of cases.

In an illustrative embodiment, an ADM system receives a request to provide an input dataset to a machine learning (ML) model, trained using a training data distribution, to generate predictions based on input data. The ADM system calculates, based on model traits of the model and the input dataset, an anomaly score indicating a degree of similarity between the input dataset and the training data distribution. The ADM system adjusts, based on the anomaly score, the input dataset to generate a modified input dataset. The ADM system increases a likelihood of an accurate prediction by the ML model when generating a prediction output by providing the modified input dataset to the ML model instead of the input dataset.

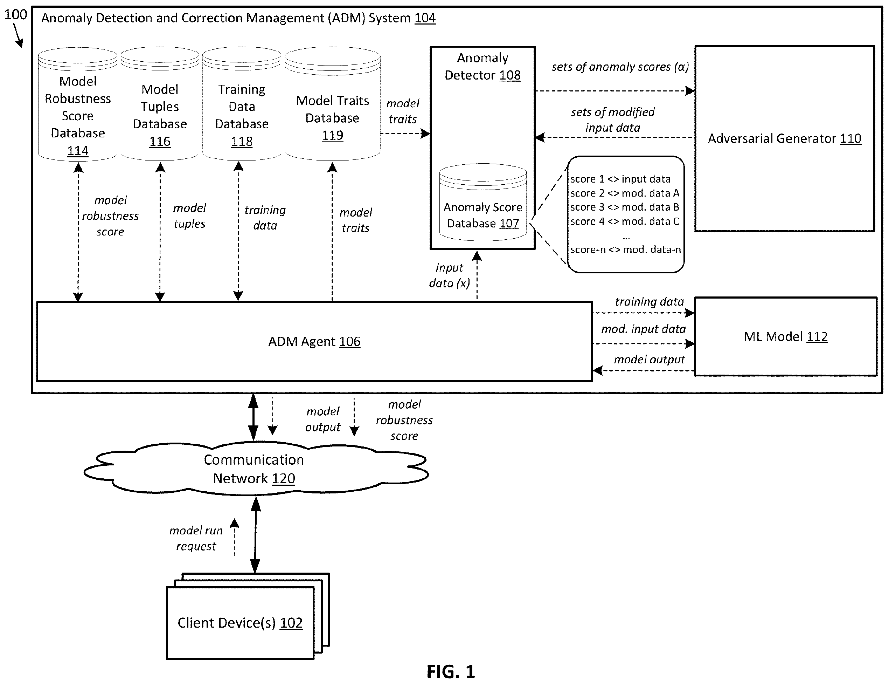

FIG. 1 is a block diagram depicting an example environment for anomaly correction via benevolent adversarial attacks, according to some embodiments. The environment 100 includes an Anomaly Detection and Correction Management (ADM) System 104 and one or more client devices 102 that are each communicably coupled together via a communication network 120. The ADM system 104 includes and/or executes an ADM agent 106, an anomaly detector 108, and adversarial generator 110, and one or more ML models 112. The anomaly detector includes an anomaly score database 107 for storing an anomaly score associated with an input dataset, and a plurality of anomaly scores that are respectively associated with a plurality of modified datasets.

The ADM system 104, in some embodiments, includes a plurality of databases that are configured to store different datasets. Specifically, the ADM system 104 includes a model robustness database 114 that is configured to store a plurality of model robustness scores indicative of the ML model's 112 robustness to adversarial attacks, as well as its robustness to anomalous inputs.

The ADM system 104 includes a model traits database 119 that is configured to store model traits associated with the ML model 112. The model traits may include any information that describes the functionality and performance of the ML model 112, such as an identifier to the training data distribution that was used to train the ML model 112, the training data distribution, a model correlation coefficient, a coefficient of determination, an identifier and/or description of the algorithm that is used by the trained ML model 112 to process input data, and/or the like.

The ADM system 104 includes a model tuples database 116 that is configured to store a plurality of tuples associated with the model 112. Each tuple of the plurality of tuples includes an association between a distinct input dataset, a distinct model output calculation, and a distinct anomaly score.

The ADM system 104 includes a training data database 118 for storing training data distribution that the ADM system uses to train the ML model 112.

The ADM system 104 may be any suitable type of computing device or machine that has a processing device, for example, a server computer (e.g., an application server, a catalog server, a communications server, a computing server, a database server, a file server, a game server, a mail server, a media server, a proxy server, a virtual server, a web server), a desktop computer, a laptop computer, a tablet computer, a mobile device, a smartphone, a set-top box, a graphics processing unit (GPU), etc. In some examples, a computing device may include a single machine or may include multiple interconnected machines (e.g., multiple servers configured in a cluster).

Still referring to FIG. 1, an ADM system 104 receives a request (model run request) to provide an input dataset to the ML model 112, trained using a training data distribution, to generate predictions based on input data. The ADM system 104 retrieves model traits associated with the ML model 112 from the model traits database 119. The ADM system 104 uses its anomaly detector 108 to calculate, based on the model traits of the ML model 112 and the input dataset, an anomaly score indicating a likelihood of an accurate prediction by the ML model 112 when generating a prediction output. The ADM system uses its adversarial generator 110 to adjust (e.g., adds portions, removes portions, or modifies portions), based on the anomaly score, the input dataset to generate a modified input dataset. The ADM system calculates, based on model traits of the model and the input dataset, an anomaly score indicating a degree of similarity between the input dataset and the training data distribution. The ML model 112 provides the model output (prediction output) to the ADM agent 106, which in turn sends the model output to the client device 102. The ADM system 104 gathers tuples associated with the ML model 112 and stores the tuples in the model tuples database 116. The ADM system 104 may generate robustness scores associated with the ML model 112 and store the robustness scores in the model robustness score database. The ADM system 104 may also send the robustness scores to the client device 102.

Although FIG. 1 shows only a select number of computing devices (e.g., ADM system 104, client device 102, etc.), the environment 100 may include any number of computing devices, components, and databases that are interconnected in any arrangement to facilitate the exchange of data between the computing devices.

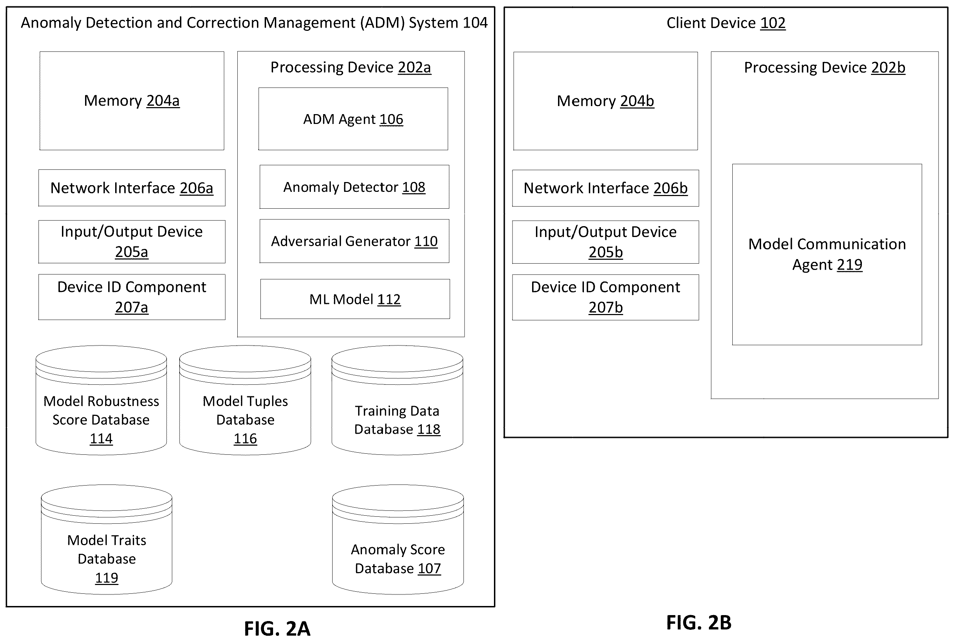

FIG. 2A is a block diagram depicting an example of the ADM system in FIG. 1, according to some embodiments. While various devices, interfaces, and logic with particular functionality are shown, it should be understood that the ADM system 104 may include any number of devices and/or components, interfaces, and logic for facilitating the functions described herein. For example, the activities of multiple devices may be combined as a single device and implemented on a same processing device (e.g., processing device 202a), as additional devices and/or components with additional functionality are included.

The ADM system 104 includes a processing device 202a (e.g., general purpose processor, a PLD, etc.), which may be composed of one or more processors, and a memory 204a (e.g., synchronous dynamic random-access memory (DRAM), read-only memory (ROM)), which may communicate with each other via a bus (not shown).

The processing device 202a may be provided by one or more general-purpose processing devices such as a microprocessor, central processing unit, or the like. In some embodiments, processing device 202a may include a complex instruction set computing (CISC) microprocessor, reduced instruction set computing (RISC) microprocessor, very long instruction word (VLIW) microprocessor, or a processor implementing other instruction sets or processors implementing a combination of instruction sets. In some embodiments, the processing device 202a may include one or more special-purpose processing devices such as an application specific integrated circuit (ASIC), a field programmable gate array (FPGA), a digital signal processor (DSP), network processor, or the like. The processing device 202a may be configured to execute the operations described herein, in accordance with one or more aspects of the present disclosure, for performing the operations and steps discussed herein.

The memory 204a (e.g., Random Access Memory (RAM), Read-Only Memory (ROM), Non-volatile RAM (NVRAM), Flash Memory, hard disk storage, optical media, etc.) of processing device 202a stores data and/or computer instructions/code for facilitating at least some of the various processes described herein. The memory 204a includes tangible, non-transient volatile memory, or non-volatile memory. The memory 204a stores programming logic (e.g., instructions/code) that, when executed by the processing device 202a, controls the operations of the ADM system 104. In some embodiments, the processing device 202a and the memory 204a form various processing devices and/or circuits described with respect to the ADM system 104. The instructions include code from any suitable computer programming language such as, but not limited to, C, C++, C#, Java, JavaScript, VBScript, Perl, HTML, XML, Python, TCL, and Basic.

The ADM system 104 includes a model robustness database 114 for storing a plurality of model robustness scores indicative of the ML model's 112 robustness to adversarial attacks, as well as its robustness to anomalous inputs.

The ADM system 104 includes a model traits database 119 for storing model traits associated with the ML model 112. The model traits may include any information that describes the functionality and performance of the ML model 112, such as an identifier to the training data distribution that was used to train the ML model 112, the training data distribution, a model correlation coefficient, a coefficient of determination, an identifier and/or description of the algorithm that is used by the trained ML model 112 to process input data, and/or the like

The ADM system 104 includes a training data database 118 for storing training data distribution that the ADM system uses to train the ML model 112.

The ADM system 104 includes a model tuples database 116 that is configured to store a plurality of tuples associated with the model 112. Each tuple of the plurality of tuples includes an association between a distinct input dataset, a distinct model output calculation, and a distinct anomaly score.

The processing device 202a executes ADM agent 106, anomaly detector 108, adversarial generator 110, and ML model 112.

The ADM agent 106 may be configured to retrieve a training data distribution from the training data database 118 and then use the training data distribution to train the ML model 112 to generate predictions based on one or more sets of input data (e.g., input data, modified input data).

The ADM agent 106 may be configured to receive, from the client device 102 via the communication network 120, a request (sometimes referred to as a model run request) to provide an input dataset to a trained model (e.g., ML model 112) so that the trained ML model 112 can generate predictions based on the input data. The request may include the input dataset or an identifier (e.g., network address, input dataset identifier) to the input dataset. For example, the request may include an identifier to the input data and a network address (e.g., Uniform Resource Locator (URL)) to a storage location (e.g., a local database, a local memory, a remote database) that stores the input data. The ADM agent 106 may use the identifier to the input data and a network address to retrieve the input data from the storage location.

The ADM agent 106 may be configured to retrieve model traits associated with the ML model 112 from the model traits database 119. The model traits may include any information that describes the functionality and performance of the ML model 112, such as an identifier to the training data distribution that was used to train the ML model 112, the training data distribution, a model correlation coefficient, a coefficient of determination, an identifier and/or description of the algorithm that is used by the trained ML model 112 to process input data, and/or the like.

The ADM agent 106 may be configured to calculate, based on the model traits of the ML model 112 and the input dataset, an anomaly score indicating a likelihood of an accurate prediction by the ML model 112 when generating a prediction output based on the input data. In this embodiment, the ADM agent 106 does not provide the input data to ML model 112 to cause the model to produce an output prediction. Rather, the ADM agent 106 calculates (e.g., estimates) a likelihood of accuracy value based on the model traits retrieved from the model traits database 119 instead of calculating this likelihood of accuracy value based on a prediction output from the ML model 112. However, in other embodiments, the ADM agent 106 may be configured to calculate this likelihood of accuracy value based on providing the input data to the ML model 112 and analyzing the output prediction that is generated by the ML model 112. The anomaly score may also indicate the number of incorrect predictions the ML model 112 would make based on the input dataset. The ADM agent 106 may further make this determination based on ground truth information associated with the input dataset.

In some embodiments, the ADM agent 106 may calculate the anomaly score by calculating a difference between the input dataset and the training data distribution. For example, the difference may identify particular portions of the input dataset that does not exist in the training data distribution. As another example, the difference may indicate that the input dataset falls outside of a range of the training data distribution.

The ADM agent 106 may be configured to adjust (e.g., modify), based on the anomaly score, the input dataset to generate a modified input dataset. The ADM agent 106 may adjust the input dataset by adding information, removing information, reorganizing the information, translating the information from one language to another language but substantially maintaining the same content, and/or reformatting the information.

The input dataset may include a plurality of portions. In these embodiments, the ADM agent 106 may be configured to determine that a first portion (e.g., a word, a number, a string of characters, numbers, alphanumeric characters, an entire image, and/or a portion of an impact) of the plurality of portions (e.g., multiple paragraphs, multiple images, etc.) of the input dataset has a greater impact on the anomaly score than each impact associated with remaining portions of the plurality of portions. The ADM agent 106 may then adjust the first portion without adjusting the remaining portions of the plurality of portions. In other embodiments, the ADM agent 106 may identify a plurality of portions of the input dataset that have the greatest impact on the anomaly score and adjust those portions without adjusting the other remaining portions.

In some embodiments, the ADM agent 106 may be configured to determine that the input dataset includes malicious code, which may be configured to cause harm, security breaches, or other threats to computer systems and networks. The ADM agent 106 may be configured to adjust one or more portions (e.g., including the malicious code itself) of the input dataset to make the previously undetectable malicious code detectible by the ML model 112.

In some embodiments, instead of adjusting the input data itself, the ADM agent 106 may generate a modified input dataset based on the input dataset (sometimes referred to as original input dataset). Thus, the original input dataset remains unaltered.

The ADM agent 106 may be configured to increase the likelihood of accuracy of the ML model 112 to generate the prediction output by providing the modified input dataset to the model instead of the input dataset. For example, if the ADM agent 106 provided the original/unaltered input dataset to the ML model 112, then the ML model 112 would generate a first prediction based on the original/unaltered input dataset, with the first prediction corresponding to a first likelihood of accuracy value. But, if the ADM agent 106 provided the modified input dataset to the ML model 112, then the ML model 112 would generate a second prediction based on the modified input dataset, with the second prediction corresponding to a second likelihood of accuracy value. The second likelihood of accuracy value would be greater than (more accurate) than the first likelihood of accuracy value because the difference between the modified input dataset and the training data distribution is less than the difference between the input dataset and the training data distribution. In other words, the ML model 112 would be more likely to make accurate predictions based on the modified input dataset because the training data distribution used to train the ML model 112 is representative of the modified input dataset, but it would not be (or at least to a lesser degree) representative of the input dataset.

Advantageously, the ADM agent 106 is able to increase the likelihood of accuracy of the ML model 112 to generate the prediction output without having to retrain the ML model 112 at any time after receiving the request (e.g., the model run request) and before providing the modified input dataset to the ML model 112. Notable, training a machine learning model can be quite costly due to several factors. These include the need for powerful hardware (e.g., Graphics Processing Units (GPUs) or Tensor Processing Units (TPUs)), large datasets, and significant computational resources. Additionally, the process often involves substantial time and expertise, which can further drive up costs. Being able to avoid these costs allows organizations to allocate resources more efficiently, focusing on other critical areas such as model deployment and maintenance. It also makes machine learning more accessible to smaller companies or individuals who may not have the budget for extensive training processes. Overall, reducing training costs can accelerate innovation and the adoption of machine learning technologies.

In some embodiments, the ADM agent 106 may be configured to calculate, based on the model traits of the ML model 112 and the modified input dataset, an updated anomaly score indicating an updated accuracy of the ML model 112 associated with generating an updated prediction output. The ADM agent 106 may be configured to adjust, based on the updated anomaly score, the modified input dataset to generate a different input dataset. The ADM agent 106 may be configured to provide the different input dataset to the ML model 112 to cause the ML model 112 to generate the updated prediction output.

In some embodiments, the ADM agent 106 may be configured to acquire a plurality of tuples associated with the model 112. Each tuple of the plurality of tuples includes an association between a distinct input dataset, a distinct model output calculation, and a distinct anomaly score. In some embodiments, the ADM agent 106 may be configured to generate, based on the plurality of tuples, one or more robustness scores indicating a robustness of the model to process anomalous inputs. An anomalous input is one that falls outside of the range of the training data distribution that was used to train the ML model 112.

In some embodiments, the ADM agent 106 may be configured to send the prediction output and the one or more robustness scores to the client device 102.

The ADM system 104 includes a network interface 206a configured to establish a communication session with a computing device for sending and receiving data over a communication network to the computing device. Accordingly, the network interface 206a includes a cellular transceiver (supporting cellular standards), a local wireless network transceiver (supporting 802.11X, ZigBee, Bluetooth, Wi-Fi, or the like), a wired network interface, a combination thereof (e.g., both a cellular transceiver and a Bluetooth transceiver), and/or the like. In some embodiments, the ADM system 104 includes a plurality of network interfaces 206a of different types, allowing for connections to a variety of networks, such as local area networks (public or private) or wide area networks including the Internet, via different sub-networks.

The ADM system 104 includes an input/output device 205a configured to receive user input from and provide information to a user. In this regard, the input/output device 205a is structured to exchange data, communications, instructions, etc. with an input/output component of the ADM system 104. Accordingly, input/output device 205a may be any electronic device that conveys data to a user by generating sensory information (e.g., a visualization on a display, one or more sounds, tactile feedback, etc.) and/or converts received sensory information from a user into electronic signals (e.g., a keyboard, a mouse, a pointing device, a touch screen display, a microphone, etc.). The one or more user interfaces may be internal to the housing of the ADM system 104, such as a built-in display, touch screen, microphone, etc., or external to the housing of the ADM system 104, such as a monitor connected to the ADM system 104, a speaker connected to the ADM system 104, etc., according to various embodiments. In some embodiments, the ADM system 104 includes communication circuitry for facilitating the exchange of data, values, messages, and the like between the input/output device 205a and the components of the ADM system 104. In some embodiments, the input/output device 205a includes machine-readable media for facilitating the exchange of information between the input/output device 205a and the components of the ADM system 104. In still another embodiment, the input/output device 205a includes any combination of hardware components (e.g., a touchscreen), communication circuitry, and machine-readable media.

The ADM system 104 includes a device identification component 207a (shown in FIG. 2A as device ID component 207a) configured to generate and/or manage a device identifier associated with the ADM system 104. The device identifier may include any type and form of identification used to distinguish the ADM system 104 from other computing devices. In some embodiments, to preserve privacy, the device identifier may be cryptographically generated, encrypted, or otherwise obfuscated by any device and/or component of ADM system 104. In some embodiments, the ADM system 104 may include the device identifier in any communication (e.g., model output, model robustness score, etc.) that the ADM system 104 sends to a computing device.

The ADM system 104 includes a bus (not shown), such as an address/data bus or other communication mechanism for communicating information, which interconnects the devices and/or components of ADM system 104, such as processing device 202a, network interface 206a, input/output device 205a, and/or device ID component 207a.

In some embodiments, some or all the devices and/or components of ADM system 104 may be implemented with the processing device 202a. For example, the ADM system 104 may be implemented as a software application stored within the memory 204a and executed by the processing device 202a. Accordingly, such embodiment can be implemented with minimal or no additional hardware costs. In some embodiments, any of these above-recited devices and/or components rely on dedicated hardware specifically configured for performing operations of the devices and/or components.

FIG. 2B is a block diagram depicting an example of the client device in FIG. 1, according to some embodiments. While various devices, interfaces, and logic with particular functionality are shown, it should be understood that the client device 102 includes any number of devices and/or components, interfaces, and logic for facilitating the functions described herein. For example, the activities of multiple devices may be combined as a single device and implemented on a same processing device (e.g., processing device 202b), as additional devices and/or components with additional functionality are included.

The client device 102 includes a processing device 202b (e.g., general purpose processor, a PLD, etc.), which may be composed of one or more processors, and a memory 204b (e.g., synchronous dynamic random-access memory (DRAM), read-only memory (ROM)), which may communicate with each other via a bus (not shown). The processing device 202b includes identical or nearly identical functionality as processing device 202a in FIG. 2a, but with respect to devices and/or components of the client device 102 instead of devices and/or components of the ADM system 104.

The memory 204b of processing device 202b stores data and/or computer instructions/code for facilitating at least some of the various processes described herein. The memory 204b includes identical or nearly identical functionality as memory 204a in FIG. 2A, but with respect to devices and/or components of the client device 102 instead of devices and/or components of the ADM system 104.

The processing device 202b executes a model communication agent 219 that is configured to send a request (e.g., model run request) to the ADM system 104 for the ADM system 104 to perform the operations discussed herein. The request may include the input dataset or an identifier (e.g., network address, input dataset identifier) to the input dataset. For example, the request may include an identifier to the input data and a network address (e.g., Uniform Resource Locator (URL)) to a storage location (e.g., a local database, a local memory, a remote database) that stores the input data. Eventually, the model communication agent 219 may receive from the ADM system 104, a model output and/or model robustness score associated with the input dataset indicated in the request. The model communication agent 219 may display the model output and/or model robustness score on a screen for an administrator to use to optimize (e.g., via retraining and/or reconfiguring) the input dataset and/or any components of the ADM system 104.

In some embodiments, the ML model 112 may be any type of machine learning model including, for example, a fraud detection model configured to analyze transaction patterns to identify and prevent fraudulent activities in real-time; a cyber-attack detection model configured to monitor network traffic and system logs to detect and respond to potential security threats; a recommendation model configured to suggest products or content to users based on their preferences and behavior, or a predictive maintenance model configured to forecast equipment failures to optimize maintenance schedules and reduce downtime.

The client device 102 includes a network interface 206b configured to establish a communication session with a computing device for sending and receiving data over a network to the computing device. Accordingly, the network interface 206b includes identical or nearly identical functionality as network interface 206a in FIG. 2A, but with respect to devices and/or components of the client device 102 instead of devices and/or components of the ADM system 104.

The client device 102 includes an input/output device 205b configured to receive user input from and provide information to a user. In this regard, the input/output device 205b is structured to exchange data, communications, instructions, etc. with an input/output component of the client device 102. The input/output device 205b includes identical or nearly identical functionality as input/output device 205a in FIG. 2A, but with respect to devices and/or components of the client device 102 instead of devices and/or components of the ADM system 104.

The client device 102 includes a device identification component 207b (shown in FIG. 2B as device ID component 207b) configured to generate and/or manage a device identifier associated with the client device 102. The device ID component 207b includes identical or nearly identical functionality as device ID component 207a in FIG. 2A, but with respect to devices and/or components of the client device 102 instead of devices and/or components of the ADM system 104.

The client device 102 includes a bus (not shown), such as an address/data bus or other communication mechanism for communicating information, which interconnects the devices and/or components of the client device 102, such as processing device 202b, network interface 206b, input/output device 205b, and device ID component 207b.

In some embodiments, some or all of the devices and/or components of the client device 102 may be implemented with the processing device 202b. For example, the client device 102 may be implemented as a software application stored within the memory 204b and executed by the processing device 202b. Accordingly, such an embodiment can be implemented with minimal or no additional hardware costs. In some embodiments, any of these above-recited devices and/or components rely on dedicated hardware specifically configured for performing operations of the devices and/or components.

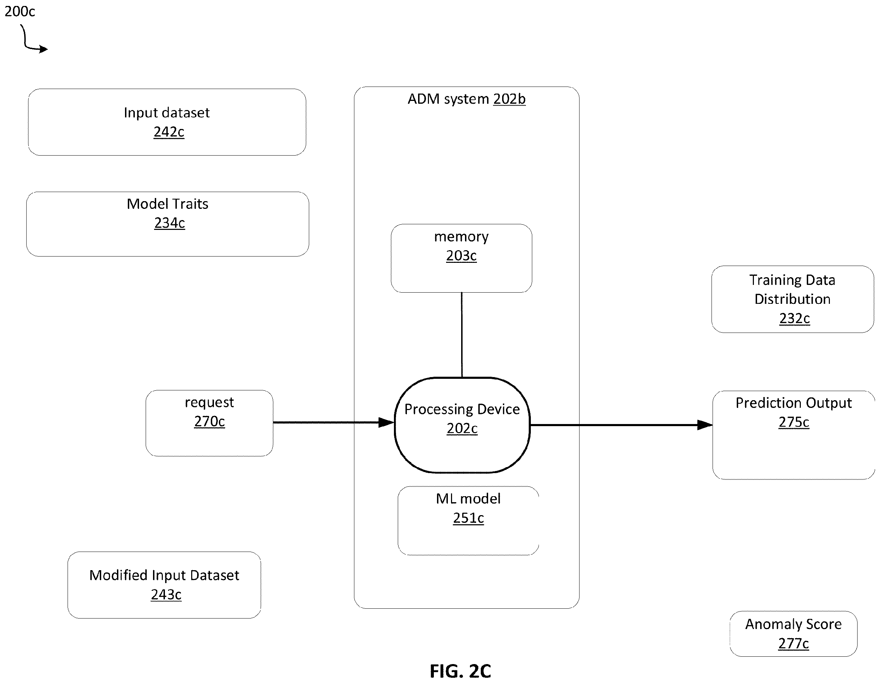

FIG. 2C is a block diagram depicting an example environment of a system to detect and correct anomalies via benevolent adversarial attacks, according to some embodiments. A system 202b (e.g., ADM system 104 in FIG. 2A) includes a processing device 202c and memory 203c coupled to the processing device 202c. The processing device 202c receives a request 270c to provide an input dataset 242c to a machine learning (ML) model 251c, trained using a training data distribution 232c, to generate predictions based on an input dataset 242c. The processing device 322 calculates, based on model traits 234c of the ML model 251c and the input dataset 242c, an anomaly score 277c indicating a likelihood of accuracy of the ML model 251c associated with generating a prediction output 275c. The processing device 322 adjusts, based on the anomaly score 277c, the input dataset to generate a modified input dataset 243c. The processing device 322 increases the likelihood of accuracy of the ML model 251c to generate the prediction output by providing the modified input dataset 243c to the ML model 251c instead of the input dataset 242c.

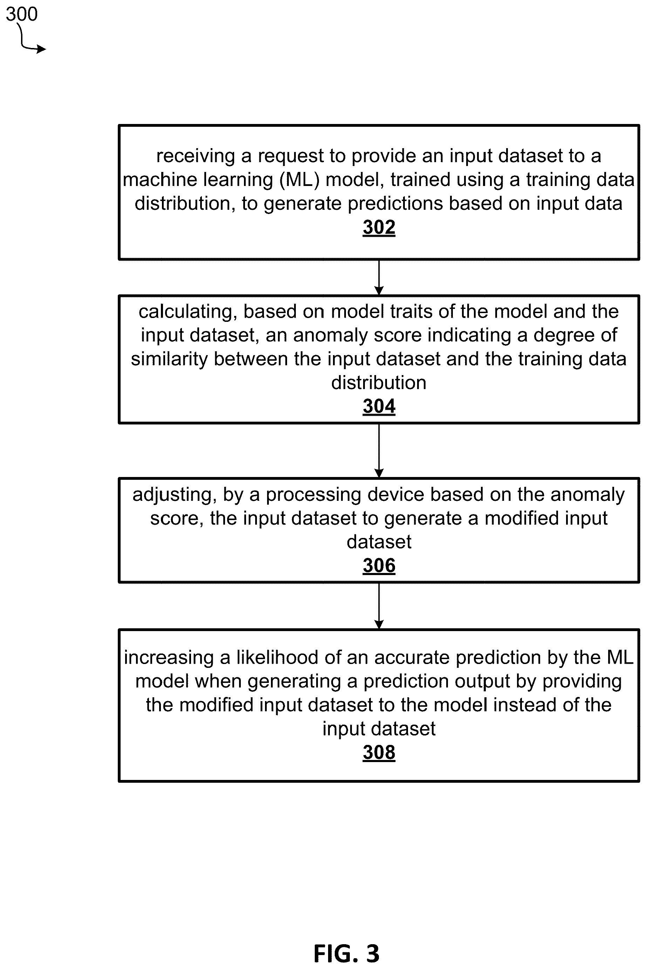

FIG. 3 is a flow diagram depicting a method of detecting and correcting anomalies via benevolent adversarial attack, according to some embodiments. Method 300 may be performed by processing logic that may include hardware (e.g., circuitry, dedicated logic, programmable logic, a processor, a processing device, a central processing unit (CPU), a system-on-chip (SoC), etc.), software (e.g., instructions and/or an application that is running/executing on a processing device), firmware (e.g., microcode), or a combination thereof. In some embodiments, method 300 may be performed by an ADM system, such as ADM system 104 in FIG. 1.

With reference to FIG. 3, method 300 illustrates example functions used by various embodiments. Although specific function blocks ("blocks") are disclosed in method 300, such blocks are examples. That is, embodiments are well suited to performing various other blocks or variations of the blocks recited in method 300. It is appreciated that the blocks in method 300 may be performed in an order different than presented, and that not all of the blocks in method 300 may be performed.

As shown in FIG. 3, the method 300 includes the block 302 of receiving a request to provide an input dataset to a machine learning (ML) model, trained using a training data distribution, to generate predictions based on input data. The method 300 includes the block 304 of calculating, based on model traits of the model and the input dataset, an anomaly score indicating a degree of similarity between the input dataset and the training data distribution. The method 300 includes the block 306 of adjusting, by a processing device based on the anomaly score, the input dataset to generate a modified input dataset. The method of 300 includes the block 308 of increasing a likelihood of an accurate prediction by the ML model when generating a prediction output by providing the modified input dataset to the model instead of the input dataset.

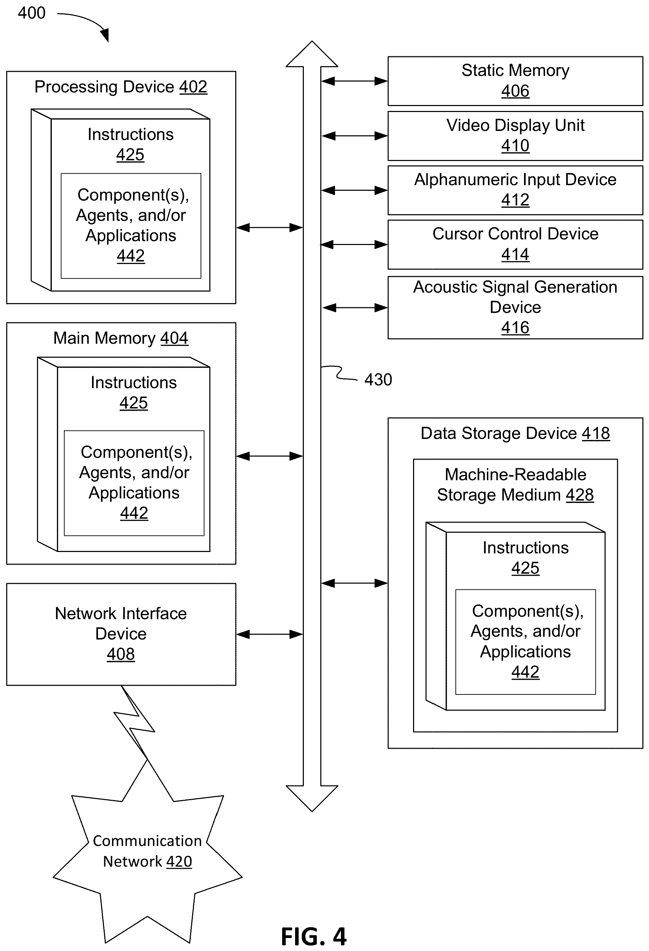

FIG. 4 is a block diagram of an example computing device that may perform one or more of the operations described herein, in accordance with some embodiments. Computing device 400 may be connected to other computing devices in a LAN, an intranet, an extranet, and/or the Internet. The computing device may operate in the capacity of a server machine in client-server network environment or in the capacity of a client in a peer-to-peer network environment. The computing device may be provided by a personal computer (PC), a set-top box (STB), a server, a network router, switch or bridge, or any machine capable of executing a set of instructions (sequential or otherwise) that specify actions to be taken by that machine. Further, while only a single computing device is illustrated, the term "computing device" shall also be taken to include any collection of computing devices that individually or jointly execute a set (or multiple sets) of instructions to perform the methods discussed herein.

The example computing device 400 may include a processing device *(e.g.,* a general-purpose processor, a PLD, etc.) 402, a main memory 404 (*e.g*., synchronous dynamic random-access memory (DRAM), read-only memory (ROM)), a static memory 406 (*e.g.,* flash memory and a data storage device 418), which may communicate with each other via a bus 430.

Processing device 402 may be provided by one or more general-purpose processing devices such as a microprocessor, central processing unit, or the like. In an illustrative example, processing device 402 may include a complex instruction set computing (CISC) microprocessor, reduced instruction set computing (RISC) microprocessor, very long instruction word (VLIW) microprocessor, or a processor implementing other instruction sets or processors implementing a combination of instruction sets. Processing device 402 may also include one or more special-purpose processing devices such as an application specific integrated circuit (ASIC), a field programmable gate array (FPGA), a digital signal processor (DSP), network processor, or the like. The processing device 402 may be configured to execute the operations described herein, in accordance with one or more aspects of the present disclosure, for performing the operations and steps discussed herein.

Computing device 400 may further include a network interface device 408 which may communicate with a communication network 420. The computing device 400 also may include a video display unit 410 *(e.g.,* a liquid crystal display (LCD) or a cathode ray tube (CRT)), an alphanumeric input device 412 *(e.g.,* a keyboard), a cursor control device 414 *(e.g.,* a mouse) and an acoustic signal generation device 416 *(e.g.,* a speaker). In one embodiment, video display unit 410, alphanumeric input device 412, and cursor control device 414 may be combined into a single component or device *(e.g.,* an LCD touch screen).

Data storage device 418 may include a computer-readable storage medium 428 on which may be stored one or more sets of instructions 425 that may include instructions for one or more components, agents, and/or applications 442 (e.g., ADM Agent 106, Anomaly Detector 108, Adversarial Generator 110, ML Model 112 in FIG. 1) for carrying out the operations described herein, in accordance with one or more aspects of the present disclosure. Instructions 425 may also reside, completely or at least partially, within main memory 404 and/or within processing device 402 during execution thereof by computing device 400, main memory 404 and processing device 402 also constituting computer-readable media. The instructions 425 may further be transmitted or received over a communication network 420 via network interface device 408.

While computer-readable storage medium 428 is shown in an illustrative example to be a single medium, the term "computer-readable storage medium" should be taken to include a single medium or multiple media *(e.g.,* a centralized or distributed database and/or associated caches and servers) that store the one or more sets of instructions. The term "computer-readable storage medium" shall also be taken to include any medium that is capable of storing, encoding or carrying a set of instructions for execution by the machine and that cause the machine to perform the methods described herein. The term "computer-readable storage medium" shall accordingly be taken to include, but not be limited to, solidstate memories, optical media and magnetic media.

Unless specifically stated otherwise, terms such as "receiving," "calculating," "adjusting," "increasing," "determining," "adjusting," "providing," "generating," "sending," or the like, refer to actions and processes performed or implemented by computing devices that manipulates and transforms data represented as physical (electronic) quantities within the computing device's registers and memories into other data similarly represented as physical quantities within the computing device memories or registers or other such information storage, transmission or display devices. Also, the terms "first," "second," "third," "fourth," etc., as used herein are meant as labels to distinguish among different elements and may not necessarily have an ordinal meaning according to their numerical designation.

Examples described herein also relate to an apparatus for performing the operations described herein. This apparatus may be specially constructed for the required purposes, or it may include a general-purpose computing device selectively programmed by a computer program stored in the computing device. Such a computer program may be stored in a computer-readable non-transitory storage medium.

The methods and illustrative examples described herein are not inherently related to any particular computer or other apparatus. Various general-purpose systems may be used in accordance with the teachings described herein, or it may prove convenient to construct more specialized apparatus to perform the required method steps. The required structure for a variety of these systems will appear as set forth in the description above.

The above description is intended to be illustrative, and not restrictive. Although the present disclosure has been described with references to specific illustrative examples, it will be recognized that the present disclosure is not limited to the examples described. The scope of the disclosure should be determined with reference to the following claims, along with the full scope of equivalents to which the claims are entitled.

As used herein, the singular forms "a", "an" and "the" are intended to include the plural forms as well, unless the context clearly indicates otherwise. It will be further understood that the terms "comprises", "comprising", "includes", and/or "including", when used herein, specify the presence of stated features, integers, steps, operations, elements, and/or components, but do not preclude the presence or addition of one or more other features, integers, steps, operations, elements, components, and/or groups thereof. Therefore, the terminology used herein is for the purpose of describing particular embodiments only and is not intended to be limiting.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Although the method operations were described in a specific order, it should be understood that other operations may be performed in between described operations, described operations may be adjusted so that they occur at slightly different times or the described operations may be distributed in a system which allows the occurrence of the processing operations at various intervals associated with the processing.

Various units, circuits, or other components may be described or claimed as "configured to" or "configurable to" perform a task or tasks. In such contexts, the phrase "configured to" or "configurable to" is used to connote structure by indicating that the units/circuits/components include structure (e.g., circuitry) that performs the task or tasks during operation. As such, the unit/circuit/component can be said to be configured to perform the task, or configurable to perform the task, even when the specified unit/circuit/component is not currently operational (e.g., is not on). The units/circuits/components used with the "configured to" or "configurable to" language include hardware--for example, circuits, memory storing program instructions executable to implement the operation, etc. Reciting that a unit/circuit/component is "configured to" perform one or more tasks, or is "configurable to" perform one or more tasks, is expressly intended not to invoke 35 U.S.C. §112(f), for that unit/circuit/component. Additionally, "configured to" or "configurable to" can include generic structure (e.g., generic circuitry) that is manipulated by software and/or firmware (e.g., an FPGA or a general-purpose processor executing software) to operate in manner that is capable of performing the task(s) at issue. "Configured to" may also include adapting a manufacturing process (e.g., a semiconductor fabrication facility) to fabricate devices (e.g., integrated circuits) that are adapted to implement or perform one or more tasks. "Configurable to" is expressly intended not to apply to blank media, an unprogrammed processor or unprogrammed generic computer, or an unprogrammed programmable logic device, programmable gate array, or other unprogrammed device, unless accompanied by programmed media that confers the ability to the unprogrammed device to be configured to perform the disclosed function(s).

The foregoing description, for the purpose of explanation, has been described with reference to specific embodiments. However, the illustrative discussions above are not intended to be exhaustive or to limit the present disclosure to the precise forms disclosed. Many modifications and variations are possible in view of the above teachings. The embodiments were chosen and described to best explain the principles of the embodiments and its practical applications, to thereby enable others skilled in the art to best utilize the embodiments and various modifications as may be suited to the particular use contemplated. Accordingly, the present embodiments are to be considered as illustrative and not restrictive, and the present disclosure is not to be limited to the details given herein but may be modified within the scope and equivalents of the appended claims.

## Claims

1. A method comprising:
receiving a request to provide an input dataset to a machine learning, ML, model, trained using a training data distribution, to generate predictions based on input data;
calculating, based on model traits of the ML model and the input dataset, an anomaly score indicating a degree of similarity between the input dataset and the training data distribution;
adjusting, by a processing device based on the anomaly score, the input dataset to generate a modified input dataset; and
increasing a likelihood of an accurate prediction by the ML model when generating a prediction output by providing the modified input dataset to the ML model instead of the input dataset.

2. The method of claim 1, wherein calculating, based on the ML model traits of the ML model and the input dataset, the anomaly score is without providing the input data to the model.

3. The method of claim 1, wherein increasing the likelihood of the accurate prediction by the ML model when generating the prediction output is without retraining the ML model after receiving the request and without retraining the ML model before providing the modified input dataset to the ML model.

4. The method of claim 1, wherein calculating, based on the model traits of the ML model and the input dataset, the anomaly score further comprises:
calculating a difference between the input dataset and the training data distribution.

5. The method of claim 1, wherein the input dataset comprises a plurality of portions, and wherein adjusting, based on the anomaly score, the input dataset to generate the modified input dataset further comprises:
determining that a first portion of the plurality of portions of the input dataset has a greater impact on the anomaly score than each impact associated with remaining portions of the plurality of portions.

6. The method of claim 5, further comprising:
adjusting the first portion without adjusting the remaining portions of the plurality of portions.

7. The method of claim 1, further comprising:
calculating, based on the model traits of the ML model and the modified input dataset, an updated anomaly score indicating an updated accuracy of the ML model associated with generating an updated prediction output.

8. The method of claim 7, further comprising:
adjusting, based on the updated anomaly score, the modified input dataset to generate a different input dataset; and
providing the different input dataset to the ML model to cause the ML model to generate the updated prediction output.

9. The method of claim 1, further comprising:
acquiring a plurality of tuples associated with the ML model, wherein each tuple of the plurality of tuples comprising an association between a distinct input dataset, a distinct model output calculation, and a distinct anomaly score; and
generating, based on the plurality of tuples, one or more robustness scores indicating a robustness of the ML model to process anomalous inputs.

10. The method of claim 9, further comprising;
sending the prediction output and the one or more robustness scores to a client device.

11. A system comprising:
a memory; and
a processing device, operatively coupled to the memory, configured to carry out the method of any of claims 1 to 10.

12. A non-transitory computer-readable medium storing instructions that, when executed by a processing device, cause the processing device to carry out the method of any of claims 1 to 10.
